(19) Europäisches Patentamt
European Patent Office
Office européen des brevets

(11) **EP 3 318 971 A1**

(12) **EUROPÄISCHE PATENTANMELDUNG**

(43) Veröffentlichungstag:
**09.05.2018 Patentblatt 2018/19**

(51) Int Cl.:
*G06F 9/44* *(2018.01)*

(21) Anmeldenummer: **16197756.6**

(22) Anmeldetag: **08.11.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Healthcare GmbH**
**91052 Erlangen (DE)**

(72) Erfinder: **Kretschmer, Jan**
**90429 Nürnberg (DE)**

(54) **BESTIMMEN VON WAHL-VERKNÜPFUNGSSTRUKTUREN IN EINEM GRAPHISCHEN COMPUTERPROGRAMM**

(57) Die Erfindung betrifft ein Verfahren, um in einer graphischen Programmiersprache zu einem Wahl-Modul geeignete Wahl-Verknüpfungsstrukturen bereitzustellen.

Die Erfindung basiert darauf, dass erste Verknüpfungsstrukturen wenigstens eines ersten Moduls bestimmt werden, wobei die ersten Verknüpfungsstrukturen sowie das erste Modul in graphischen Trainingsprogrammabschnitten enthalten sind. Weiterhin wird ein Wahl-Modul sowie eine bestehende Verknüpfungsstruktur des Wahlmoduls empfangen, wobei das Wahl-Modul in einem graphischen Computerprogramm enthalten ist, und wobei die bestehende Verknüpfungsstruktur die Verknüpfungsstruktur des Wahl-Moduls in dem graphischen Computerprogramm bezeichnet. Weiterhin werden Wahl-Verknüpfungsstrukturen aus der Menge der ersten Verknüpfungsstrukturen ausgewählt, wobei jede der Wahl-Verknüpfungsstrukturen eine Verknüpfungsstruktur des Wahl-Moduls ist, und wobei jede der Wahl-Verknüpfungsstrukturen die bestehende Verknüpfungsstruktur des Wahl-Moduls umfasst.

Die Erfinder haben erkannt, dass durch das erfindungsgemäße Bestimmen der ersten Verknüpfungsstrukturen aus den graphischen Trainingsprogrammabschnitten Beispiele in Form von Wahl-Verknüpfungsstrukturen für unterschiedliche Anwendungsgebiete eines Moduls abgeleitet werden können, ohne dass diese Beispiele durch einen Programmierer erstellt oder verwaltet werden müssen.

FIG 5

EP 3 318 971 A1

**Beschreibung**

Visuelle Programmierung (ein englischer Fachbegriff ist "visual programming") ist eine Methode, um ein graphisches Computerprogramm zu erstellen. Dabei werden Module mit definierten Schnittstellen für Eingaben und Ausgaben für den Programmierer bereitgestellt, die elementare Aufgaben durchführen können oder Eingabe- und/oder Ausgabeeinheiten abbilden. Durch Kombination dieser Module mittels Verknüpfungen kann der Programmierer komplexe Computerprogramme erstellen. Ein graphisches Computerprogramm kann mittels eines Compilers (englisches Wort für Kompilierer) in ein Computerprogramm übersetzt werden, wobei das Computerprogramm dann unabhängig von einer Laufzeitumgebung auf anderen Computern, Mikrocontrollern oder Recheneinheiten eingesetzt werden kann.

Trotz einer vermeintlichen einfachen Darstellung ist die Erstellung eines komplexen Computerprogramms meist nur durch einen erfahrenen Programmierer mit hohem Zeitaufwand möglich. Beispielsweise muss der Programmierer Kenntnisse über die Funktionsweise der einzelnen verwendbaren Module sowie die von ihnen bereitgestellten Schnittstellen haben. Insbesondere sind die Auswahl eines Moduls, das ein bereits bestehendes graphisches Computerprogramm erweitert, und dessen korrekte Einbindung in ein graphisches Computerprogramm komplex und erfordern viel Erfahrung durch den Programmierer.

Verschiedene Systeme zur visuellen Programmierung weisen unterschiedliche Ansätze auf, um diese Aufgabe für den Programmierer durchführbar zu machen und/oder zu beschleunigen. Eine einfache und verbreitete Möglichkeit ist, ein oder mehrere Tutorien bereitzustellen, welche grundlegende Funktionen erläutern. Weiterführende Möglichkeiten sind das Bereitstellen von Anwendungsbeispielen sowie von Referenzdokumentation der bereitstehenden Module und Schnittstellen. Als weitere Möglichkeit ist bekannt, für jede Schnittstelle eines Moduls andere Module anzuzeigen, die über diese Schnittstelle mit dem Modul verbunden werden können. Eine andere Möglichkeit ist es, Beispiele für die Einbettung eines Moduls in ein graphisches Computerprogramm direkt in der graphischen Programmieroberfläche anzuzeigen.

Diese bestehenden Möglichkeiten weisen aber einige Nachteile auf. Umfangreiche Referenzdokumentation muss durch einen Programmierer erst durchgearbeitet werden, eine Suche nach Lösungen eines konkreten Problems in einer Referenzdokumentation ist daher zeitaufwändig. Beispiele müssen durch einen Experten gepflegt werden, da sich das Nutzungsprofil von Modulen durch neue Entwicklungen oder neue Module ändern kann. Ist es in der graphischen Programmierung möglich, benutzerdefinierte Module zu erzeugen und in graphischen Programmen zu verwenden, müssen diese ebenfalls durch den Ersteller mit einer Referenzdokumentation oder mit Beispielen versehen werden. Weiterhin kann die Verwendung eines Moduls in unterschiedlichen Anwendungsbereichen oder sogar bei verschiedenen Programmierern vom ursprünglich vorgesehenen Verwendungsbeispiel abweichen. Schließlich können beim Übertragen von vorliegenden Beispielen in die graphische Programmierumgebung Fehler entstehen.

Aufgabe der vorliegenden Erfindung ist es also, ein Verfahren bereitzustellen, das eine schnellere und effizientere Erstellung eines graphischen Computerprogramms ermöglicht.

Diese Aufgabe wird gelöst durch ein Verfahren nach Anspruch 1, durch eine Bestimmungseinheit nach Anspruch 13 sowie durch ein Computerprogrammprodukt nach Anspruch 15.

Nachstehend wird die erfindungsgemäße Lösung der Aufgabe in Bezug auf die beanspruchten Vorrichtungen als auch in Bezug auf das beanspruchte Verfahren beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Vorrichtung gerichtet sind) auch mit den Merkmalen, die in Zusammenhang mit einem Verfahren beschrieben oder beansprucht sind, weitergebildet sein. Die entsprechenden funktionalen Merkmale des Verfahrens werden dabei durch entsprechende gegenständliche Module ausgebildet.

Die Erfindung basiert darauf, dass erste Verknüpfungsstrukturen wenigstens eines ersten Moduls mittels einer Recheneinheit bestimmt werden, wobei die ersten Verknüpfungsstrukturen sowie das erste Modul in graphischen Trainingsprogrammabschnitten enthalten sind. Weiterhin wird mittels einer Schnittstelle ein Wahl-Modul sowie eine bestehende Verknüpfungsstruktur des Wahlmoduls empfangen, wobei das Wahl-Modul in einem graphischen Computerprogramm enthalten ist, und wobei die bestehende Verknüpfungsstruktur die Verknüpfungsstruktur des Wahl-Moduls in dem graphischen Computerprogramm bezeichnet. Weiterhin werden mittels der Recheneinheit Wahl-Verknüpfungsstrukturen aus der Menge der ersten Verknüpfungsstrukturen ausgewählt, wobei jede der Wahl-Verknüpfungsstrukturen eine Verknüpfungsstruktur des Wahl-Moduls ist, und wobei jede der Wahl-Verknüpfungsstrukturen die bestehende Verknüpfungsstruktur des Wahl-Moduls umfasst.

Die Erfinder haben erkannt, dass durch das erfindungsgemäße Bestimmen der ersten Verknüpfungsstrukturen aus den graphischen Trainingsprogrammabschnitten Beispiele in Form von Wahl-Verknüpfungsstrukturen für unterschiedliche Anwendungsgebiete eines Moduls abgeleitet werden können, ohne dass diese Beispiele durch einen Programmierer erstellt oder verwaltet werden müssen. Das Bestimmen der ersten Verknüpfungsstrukturen kann hierbei insbesondere durch eine Analyse der graphischen Trainingsprogrammabschnitte erfolgen.

Indem die bestehende Verknüpfungsstruktur des Wahl-Moduls beim ersten Auswählen berücksichtigt wird, und nur Wahl-Verknüpfungsstrukturen ausgewählt werden, die diese bestehende Verknüpfungsstruktur des Wahl-Moduls umfassen, werden unpassende Wahl-Verknüpfungsstrukturen nicht ausgewählt und damit die benötigte Zeit für die Auswahl der passenden Verknüpfungsstruktur aus den Wahl-Verknüpfungsstrukturen reduziert.

Die graphischen Trainingsprogrammabschnitte können individuell an den Programmierer angepasst sein. Beispielsweise ist es möglich, nur graphische Trainingsprogrammabschnitte zu verwenden, die der Programmierer selbst erstellt hat. Alternativ können auch graphische Trainingsprogrammabschnitte einer Gruppe von Programmierern verwendet werden, die an ähnlichen Aufgabenstellungen oder an ähnlichen graphischen Computerprogrammen arbeitet. Dadurch kann das Bestimmen der ersten Verknüpfungsstrukturen individuell für den Programmierer oder den Anwendungszweck durchgeführt werden. Dadurch sind die Wahl-Verknüpfungsstrukturen besser an die Programmierer oder den Anwendungszweck angepasst, und die benötigte Zeit für die Auswahl der passenden Verknüpfungsstruktur aus den Wahl-Verknüpfungsstrukturen reduziert sich.

Gemäß einem weiteren Aspekt der Erfindung erfolgt das Bestimmen der ersten Verknüpfungsstrukturen vor dem Empfangen des Wahl-Moduls und der bestehenden Verknüpfungsstruktur des Wahl-Moduls. Weiterhin umfasst nach diesem Aspekt der Erfindung das erste Modul wenigstens das am häufigsten in den graphischen Trainingsprogrammen enthaltene Modul. Durch diesen Aspekt ist es möglich, notwendige Berechnungen und Sortierungen bereits vor Beginn der eigentlichen Programmierarbeit durchzuführen. Hierbei kann vor Beginn der eigentlichen Programmiertätigkeit beispielsweise beim Start der graphischen Programmierumgebung bedeuten, die notwendigen Vorberechnungen können aber auch in bestimmten Zeitintervallen auf einem Server durchgeführt werden. Da das Bestimmen zumindest für das am häufigsten in den Trainingsprogrammabschnitten vorkommende Modul erfolgt, werden die Berechnungen und Sortierungen für ein Modul durchgeführt, dass auch mit hoher Wahrscheinlichkeit in einem graphischen Computerprogramm verwendet wird. Durch diese Berechnungen und Sortierungen verkürzt sich die Zeit von dem Empfangen des Wahl-Moduls bis zu dem ersten Auswählen der Wahl-Verknüpfungsstrukturen, da nach dem Empfangen des Wahl-Moduls keine Abfrage aller graphischen Trainingsprogrammabschnitte mehr notwendig ist. Es ist auch möglich, die Berechnungen und Sortierungen für mehrere erste Module durchzuführen. Falls das Wahl-Modul nicht in den ersten Modulen enthalten ist, muss das Bestimmen erneut durchgeführt werden, wobei hierbei das erste Modul das Wahl-Modul ist.

Gemäß einem weiteren Aspekt der Erfindung umfassen die ersten Module alle Module, die in den graphischen Trainingsprogrammabschnitten enthalten sind. Hiermit können sehr viele notwendige Berechnungen und Sortierungen vor dem Beginn der Programmiertätigkeit durchgeführt werden. Dies führt dazu, dass sehr wenige Berechnungen nach dem Empfangen des Wahl-Moduls notwendig sind, und dass das erste Auswählen der Wahl-Strukturen besonders schnell ist.

Gemäß einem weiteren Aspekt der Erfindung erfolgt das Empfangen des Wahl-Moduls vor dem Bestimmen der ersten Verknüpfungsstrukturen. Weiterhin ist nach diesem Aspekt der Erfindung das erste Modul das Wahl-Modul. Die Erfinder haben erkannt, dass es durch diese Ausgestaltung möglich ist, das Verfahren mit besonders wenig Speicherbedarf und besonders wenig Zeitbedarf für Vorberechnungen durchzuführen. Weiterhin ist es so möglich, Änderungen in den Trainingsprogrammabschnitten, die zwischen dem Beginn des Programmiervorgangs und dem Empfangen eines Wahl-Moduls erfolgen, bei den Wahl-Verknüpfungsstrukturen zu berücksichtigen.

Gemäß einem weiteren Aspekt der Erfindung umfasst das Verfahren als weiteren Schritt das Berechnen von Gewichtungsfaktoren der ersten Verknüpfungsstrukturen oder der Wahl-Verknüpfungsstrukturen basierend auf den graphischen Trainingsprogrammabschnitten mittels der Recheneinheit. Die Erfinder haben erkannt, dass mittels dieser Gewichtungsfaktoren eine Sortierung der Wahl-Verknüpfungsstrukturen anhand ihrer Wichtigkeit möglich ist. Dadurch kann ein Programmierer schneller und effizienter erkennen, welches der vorgeschlagenen Beispiele für die konkrete Situation am besten geeignet ist.

Gemäß einem weiteren Aspekt der Erfindung betrifft der Gewichtungsfaktor einer Verknüpfungsstruktur wenigstens eine gewichtete relative Häufigkeit des Auftretens der Verknüpfungsstruktur in den graphischen Trainingsprogrammabschnitten. Weiterhin erfolgt eine Gewichtung der relativen Häufigkeiten mit einem Bewertungsfaktor, der einem graphischen Trainingsprogrammabschnitt zugeordnet ist. Die relative Häufigkeit einer Verknüpfungsstruktur ist ein schnell und effizient zu bestimmendes Maß für die Wichtigkeit einer Verknüpfungsstruktur. Eine Verknüpfungsstruktur, die häufig in den graphischen Trainingsprogrammabschnitten auftritt, ist mit hoher Wahrscheinlichkeit ein Standardbeispiel für die Verwendung des Wahl-Moduls. Eine Verknüpfungsstruktur, die nur selten in den graphischen Trainingsprogrammabschnitten auftritt, ist mit hoher Wahrscheinlichkeit eine Lösung für einen Spezialfall oder sogar eine fehlerhafte Lösung. Indem die relative Häufigkeit mit einem Bewertungsfaktor gewichtet wird, wobei der Bewertungsfaktor einen graphischen Trainingsprogrammabschnitt betrifft, können bestimmte graphische Trainingsprogrammabschnitte bevorzugt werden. Beispielsweise ist denkbar, Trainingsprogrammabschnitte von erfahrenen Programmierern höher zu gewichten als von unerfahrenen Programmierer. Weiterhin ist es denkbar, eigene Trainingsprogrammabschnitte eines Programmierers höher zu gewichten als Trainingsprogrammabschnitte eines anderen Programmierers.

Gemäß einem weiteren Aspekt der Erfindung ist jedem graphischen Trainingsprogrammabschnitt der gleichen Bewertungsfaktor zugeordnet. Dies impliziert, dass der Gewichtungsfaktor einer Verknüpfungsstruktur der relativen Häufigkeit des Vorkommens dieser Verknüpfungsstruktur in den graphischen Trainingsprogrammabschnitten entspricht. Unter diesem Aspekt der Erfindung müssen die einzelnen graphischen Trainingsprogrammabschnitte nicht erst bewertet werden, um bei der Berechnung der Gewichtungsfaktoren und folglich bei dem ersten Auswählen von Wahl-Verknüpfungsstrukturen berücksichtigt zu werden. Dadurch stehen graphische Trainingsprogrammabschnitte schneller als Berechnungsgrundlage für den Gewichtungsfaktor zur Verfügung, der Wegfall der Bewertung vergrößert gleichzeitig die Effizienz des Verfahrens.

Gemäß einem weiteren Aspekt der Erfindung erfolgt das Berechnen des Gewichtungsfaktors einer Verknüpfungsstruktur mittels eines selbstlernenden Systems basierend auf den graphischen Trainingsprogrammabschnitten. Die Verwendung eines selbstlernenden Systems hat den Vorteil, dass sehr viele Faktoren in die Berechnung des Gewichtungsfaktors einer Verknüpfungsstruktur einbezogen werden können, und dass auch komplizierte Zusammenhänge und Korrelationen zwischen dem graphischen Trainingsprogrammabschnitt und der Verknüpfungsstruktur des ersten Moduls durch das selbstlernendes System erfasst werden können. Beispielsweise ist eine Korrelation zwischen einem Eingabemodul und der Verknüpfungsstruktur eines Ausgabemoduls, zwischen denen weitere Module liegen, wobei sich die dazwischenliegenden Module in den einzelnen graphischen Trainingsprogrammabschnitten unterscheiden, durch ein selbstlernendes System effizienter zu ermitteln als durch eine reine Häufigkeitsanalyse.

Gemäß einem weiteren Aspekt der Erfindung umfasst das selbstlernende System ein künstliches neuronales Netzwerk, welches in einer Trainingsphase graphische Trainingsprogrammabschnitte ohne das Wahl-Modul auf graphische Trainingsprogrammabschnitte umfassend das Wahl-Modul sowie umfassend eine Verknüpfungsstruktur des Wahl-Moduls abbildet. Bei einem künstlichen neuronalen Netzwerk handelt es sich um ein besonders robustes selbstlernendes System, wobei robust hier bedeutet, dass besonders wenig Parameter relevant für die Vorhersagen des selbstlernenden Systems sind, und somit besonders wenig Parameter von einem Benutzer eingestellt werden müssen. Weiterhin kann ein künstliches neuronales Netzwerk besonders gut komplizierte Zusammenhänge und Korrelationen bestimmen.

Gemäß einem weiteren Aspekt der Erfindung umfasst das Verfahren weiterhin das zweite Auswählen einer ausgewählten Verknüpfungsstruktur aus den Wahl-Verknüpfungsstrukturen mittels der Recheneinheit, sowie das Ergänzen der Verknüpfungsstruktur des Wahl-Moduls basierend auf der ausgewählten Verknüpfungsstruktur mittels der Recheneinheit. Die Erfinder haben erkannt, dass durch ein automatisches Ergänzen der Verknüpfungsstruktur des Wahl-Moduls basierend auf der ausgewählten Verknüpfungsstruktur die graphische Programmierung besonders schnell erfolgen kann, außerdem ist dieses automatische Ergänzen nicht fehleranfällig.

Gemäß einem weiteren Aspekt der Erfindung erfolgt das zweite Auswählen der ausgewählten Verknüpfungsstruktur aus den Wahl-Verknüpfungsstrukturen mittels des Gewichtungsfaktors. Erfolgt die Auswahl durch einen Programmierer, kann dieser anhand des Gewichtungsfaktors besonders schnell die für den gewünschten Einsatzweck geeignete Verknüpfungsstruktur auswählen. Erfolgt dagegen die Auswahl vollautomatisch, ist also insbesondere keine Interaktion des Programmierers mit der Programmierumgebung zur Auswahl der geeigneten Verknüpfungsstruktur notwendig, ist die Erweiterung des graphischen Computerprogramms ebenfalls besonders schnell möglich.

Gemäß einem weiteren Aspekt der Erfindung umfasst eine Verknüpfungsstruktur eines ersten Moduls nur zweite Module, die in einer Nachbarschaft erster Ordnung des ersten Moduls enthalten sind. Weiterhin umfasst eine Verknüpfungsstruktur alle Verknüpfungen zwischen dem ersten und den zweiten Modulen. Eine Beschränkung auf die Module in der Nachbarschaft erster Ordnung des ersten Moduls umfasst die wesentlichen Informationen über die Verwendung des ersten Moduls in einem graphischen Computerprogramm, wenn alle Verknüpfungen zwischen den Modulen berücksichtigt werden. Gleichzeitig ergibt sich durch diese Einschränkung eine deutliche Reduzierung des Speicherbedarfs und des Rechenbedarfs bei der Durchführung des Verfahrens.

Weiterhin betrifft die Erfindung eine Bestimmungseinheit zum Bestimmen von Wahl-Verknüpfungsstrukturen, umfassend folgende Einheiten:

- Schnittstelle, ausgebildet zum Empfangen eines Wahl-Moduls sowie einer bestehenden Verknüpfungsstruktur des Wahl-Moduls wobei das Wahl-Modul in einem graphischen Computerprogramm enthalten ist, und wobei die bestehende Verknüpfungsstruktur die Verknüpfungsstruktur des Wahl-Moduls in dem graphischen Computerprogramm bezeichnet,
- Recheneinheit, ausgebildet zum Bestimmen von ersten Verknüpfungsstrukturen wenigstens eines ersten Moduls, wobei die ersten Verknüpfungsstrukturen sowie das erste Modul in graphischen Trainingsprogrammabschnitten enthalten sind, weiterhin ausgebildet zum ersten Auswählen von Wahl-Verknüpfungsstrukturen aus der Menge der ersten Verknüpfungsstrukturen mittels der Recheneinheit, wobei jede der Wahl-Verknüpfungsstrukturen eine Verknüpfungsstruktur des Wahl-Moduls ist, und wobei jede der Wahl-Verknüpfungsstruktur die bestehende Verknüpfungsstruktur des Wahl-Moduls umfasst.

Eine solche Bestimmungseinheit kann insbesondere dazu ausgebildet sein, das zuvor beschriebene erfindungsgemäße Verfahren und seine Aspekte auszuführen. Die Bestimmungseinheit ist dazu ausgebildet, dieses Verfahren und seine Aspekte auszuführen, indem die erste Schnittstelle und die Recheneinheit ausgebildet sind, die entsprechenden Verfahrensschritte auszuführen.

Die Erfindung kann weiterhin ein Computerprogrammprodukt mit einem Computerprogramm betreffen, welches direkt in einen Speicher einer Bestimmungseinheit ladbar ist, mit Programmabschnitten, um alle Schritte des Verfahrens nach einem der Ansprüche 1 bis 12 auszuführen, wenn die Programmabschnitte von der Bestimmungseinheit ausgeführt werden. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Die Erfindung kann weiterhin ein computerlesbares Medium betreffen, auf welchem von einer Bestimmungseinheit lesbare und ausführbare Programmabschnitte gespeichert sind, um alle Schritte des Verfahrens nach einem der Ansprüche 1 bis 12 auszuführen, wenn die Programmabschnitte von der Bestimmungseinheit ausgeführt werden.

Die Erfindung betrifft weiterhin ein Computerprogrammprodukt, umfassend ein graphisches Computerprogramm und/oder ein Computerprogramm, das durch Kompilierung oder Interpretierung aus dem graphischen Computerprogramm hervorgegangen ist, wobei das graphische Computerprogramm unter Verwendung des Verfahrens nach einem der Ansprüche 1 bis 12 erstellt wurde. Hierbei bezeichnet Kompilierung eine Übersetzung des graphischen Computerprogramms in Maschinencode oder Zwischencode. Ein solches Computerprogrammprodukt kann neben dem graphischen Computerprogramm und/oder dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Ein graphisches Computerprogramm ist eine Sammlung von Modulen und von Verknüpfungen, wobei Verknüpfungen jeweils zwei, insbesondere genau zwei, Module verbinden. Die Anordnung von Modulen und Verknüpfungen stellt eine Berechnungsvorschrift dar, mit der Eingabedaten des graphischen Computerprogramms zu Ausgabedaten des graphischen Computerprogramms transformiert werden können. Ein graphischer Computerprogrammabschnitt ist ein Teil eines graphischen Computerprogramms. Als graphische Programmierung wird das Erstellen eines graphischen Computerprogramms durch einen Programmierer bezeichnet. Graphische Programmierung erfolgt meist mittels einer graphischen Programmieroberfläche, in der wenigstens ein graphisches Computerprogramm dargestellt wird.

Ein Modul ist eine abgeschlossene Funktion, die (möglicherweise nicht vorhandene) Eingangsdaten auf (möglicherweise nicht vorhandene) Ausgangsdaten abbildet, wobei optional die Abbildung unter Berücksichtigung von dem Modul zugeordneten Parametern erfolgt. Insbesondere kann ein Modul eine reine Funktion (ein englischer Fachbegriff ist "pure function") sein, die vom Zustand des graphischen Computerprogramms unabhängig ist und keine Seiteneffekte auf das graphische Computerprogramm hat. Ein Modul kann Eingangsschnittstellen und Ausgangsschnittstellen umfassen, wobei jeder der Eingangsschnittstellen und jeder der Ausgangsschnittstellen ein Datentyp zugeordnet sein kann.

Ein Modul kann in verschiedenen graphischen Computerprogrammen oder graphischen Computerprogrammabschnitten enthalten sein, weiterhin kann ein Modul mehrmals im gleichen graphischen Computerprogramm oder mehrmals im gleichen graphischen Computerprogrammabschnitt enthalten sein.

Eine Verknüpfung verbindet eine Ausgangsschnittstelle eines ersten Moduls mit der Eingangsschnittstelle eines zweiten Moduls. Eine solche vorhandene Verknüpfung bedeutet, dass bei der Ausführung des graphischen Computerprogramms die Ausgangsdaten des ersten Moduls als Eingangsdaten des zweiten Moduls verwendet werden. Wenn der Eingangsschnittstelle und/oder der Ausgangsschnittstelle ein Datentyp zugeordnet ist, so müssen der Datentyp der ersten Eingangsschnittstelle und der Datentyp der Ausgansschnittstelle kompatibel oder gleich sein. Eine Ausgangsschnittstelle kann mit mehreren Eingangsschnittstellen von einem oder mehreren anderen Modulen verbunden sein.

Ein Modul ohne Eingangsschnittstellen ist ein Eingabemodul. Ein Eingabemodul kann verwendet werden, um Daten in das graphische Computerprogramm einzubringen. Bei diesen Daten kann es sich beispielsweise um Computerdateien, um Benutzereingaben, um Ausgabedaten anderer unabhängiger Programme oder um Messergebnisse wenigstens eines Messgerätes handeln. Ein Modul ohne Ausgangsschnittstellen ist ein Ausgabemodul. Ein Ausgabemodul kann verwendet werden, um Daten aus dem graphischen Computerprogramm zu extrahieren. Ein Ausgabemodul kann insbesondere einer Anzeigeeinheit (wie einem Bildschirm oder dem Teil eines Bildschirms), einer Druckeinheit oder einer Computerdatei zugeordnet sein. Ein Ausgabemodul kann aber auch dazu verwendet werden, die Ausgabe des graphischen Computerprogramms an ein anderes davon unabhängiges Computerprogramm weiterzuleiten.

Zwei Module in einem graphischen Computerprogramm heißen benachbart, wenn im graphischen Computerprogramm eine Verknüpfung existiert, die beide Module verbindet. Die Nachbarschaft erster Ordnung eines ersten Moduls umfasst alle Module, die mit dem ersten Modul benachbart sind. Die Nachbarschaft N-ter Ordnung eines ersten Moduls umfasst die Nachbarschaft (N-1)-ter Ordnung des ersten Moduls sowie alle Module, die mit einem Modul der Nachbarschaft (N-1)-ter Ordnung des ersten Moduls benachbart sind.

Eine Verknüpfungsstruktur eines ersten Moduls umfasst das erste Modul sowie wenigstens eine Teilmenge einer Nachbarschaft beliebiger Ordnung des ersten Moduls in einem graphischen Computerprogramm oder in einem graphischen Computerprogrammabschnitt, sowie eine Teilmenge der Verknüpfungen zwischen diesen Modulen in dem graphischen Computerprogramm oder in dem graphischen Computerprogrammabschnitt. Bei einer Teilmenge einer Menge kann es sich auch um die leere Menge handeln, es kann sich aber auch um die gesamte Menge handeln. Eine erste Verknüpfungsstruktur umfasst eine zweite Verknüpfungsstruktur, wenn alle Module und Verknüpfungen der zweiten Verknüpfungsstruktur in der ersten Verknüpfungsstruktur enthalten sind. Eine Verknüpfungsstruktur kann in einem oder mehreren Computerprogrammen und/oder Computerprogrammabschnitten enthalten sein.

Die bestehende Verknüpfungsstruktur eines Wahl-Moduls in einem graphischen Computerprogramm ist die Verknüpfungsstruktur dieses Wahl-Moduls in dem graphischen Computerprogramm. Die bestehende Verknüpfungsstruktur kann auch in einem oder mehreren graphisch Trainingscomputerprogrammabschnitten enthalten sein. Weiterhin können erste Verknüpfungsstrukturen erster Module oder Wahl-Verknüpfungsstrukturen des Wahl-Moduls die bestehende Verknüpfungsstruktur umfassen.

Ein Gewichtungsfaktor einer Verknüpfungsstruktur ist eine Zahl oder ein Vektor, um mehrere Verknüpfungsstrukturen zu bewerten oder anzuordnen. Ein Gewichtungsfaktor kann insbesondere die relative Häufigkeit einer Verknüpfungsstruktur eines Moduls in einer Menge von graphischen Computerprogrammen betreffen, weiterhin kann ein Gewichtungsfaktor auch einen Bewertungsfaktor eines graphischen Computerprogramms betreffen. Insbesondere kann ein Gewichtungsfaktor W(V) einer Verknüpfungsstruktur V mit der Formel

$$W(V) = \frac{\sum_{i=1}^{N} \delta(G_i, V) \cdot B(G_i)}{\sum_{i=1}^{N} B(G_i)}$$

bestimmt werden, wobei $G_i$ das i-te der N graphischen Trainingsprogrammabschnitte und $B(G_i)$ dessen Bewertungsfaktor bezeichnet. Weiterhin bezeichnet $\delta(G_i,V)$ eine Indikatorfunktion, wobei $\delta(G_i,V)=1$ gilt, wenn die Verknüpfungsstruktur V im graphischen Trainingsprogrammabschnitt G enthalten ist, und ansonsten $\delta(G_i,V)=0$ gilt. Wenn für jeden Trainingsprogrammabschnitt der gleiche Bewertungsfaktor verwendet wird, vereinfacht sich diese Formel zu

$$W(V) = \frac{1}{N} \sum_{i=1}^{N} \delta(G_i, V)$$

Ein selbstlernendes System ermittelt eine Transformationsfunktion, die einen Eingabedatensatz auf einen Ausgabedatensatz abbildet, wobei die Transformationsfunktion durch ein Training ermittelt wird. Ein selbstlernendes System kann zum Beispiel auf einem künstlichen neuronalen Netzwerk (ein englischer Fachbegriff ist "artificial neural network") basieren, das mittels linearer oder nicht-linearer Transformationen und zu bestimmender Gewichte einen Eingangsdatensatz auf einen Ausgangsdatensatz abbildet. Die Gewichte des künstlichen neuronalen Netzwerks können insbesondere durch Training bestimmt werden, zum Beispiel durch Verwendung des Rückverbreitungsalgorithmus (ein englischer Fachbegriff ist "backpropagation-algorithm") anhand von existierenden Zuordnungen von Eingabedatensätzen zu Ausgabedatensätzen.

Im Folgenden wird die Erfindung anhand der in den Figuren dargestellten Ausführungsbeispiele näher beschrieben und erläutert.

Es zeigen:

FIG 1    ein Flussdiagramm des Verfahrens

FIG 2    ein weiteres Flussdiagramm des Verfahrens

FIG 3    ein graphisches Computerprogramm

FIG 4    ein Wahl-Modul mit einer Wahl-Verknüpfungsstruktur

FIG 5    das Wahl-Modul mit einer weiteren Wahl-Verknüpfungsstruktur

FIG 6    eine Bestimmungseinheit zur Bestimmung von Wahl-Verknüpfungsstrukturen

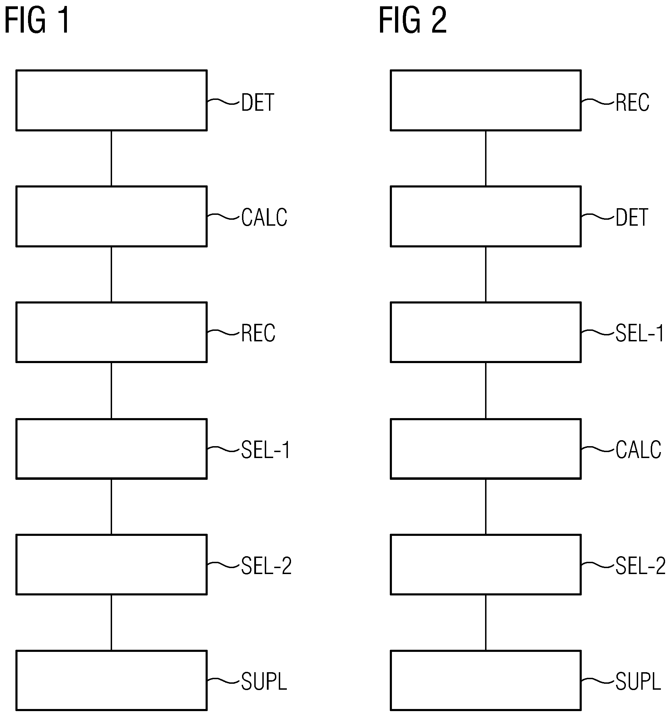

FIG 1 zeigt ein Flussdiagramm eines Ausführungsbeispiels des Verfahrens zum Bestimmen von Wahl-Verknüpfungsstrukturen.

Der erste Schritt des Ausführungsbeispiels des Verfahrens ist das Bestimmen DET von ersten Verknüpfungsstrukturen wenigstens eines ersten Moduls mittels einer Recheneinheit 602, wobei die ersten Verknüpfungsstrukturen sowie das erste Modul in graphischen Trainingsprogrammabschnitten 610.1, 610.2 enthalten sind. Die Trainingsprogrammabschnitte 610.1, 610.2 sind in einer Datenbank 606 gespeichert. Als erste Module werden alle Module verwendet, die Teil eines Programmabschnittes der graphischen Trainingsprogrammabschnitte 610.1, 610.2 sind. Weiterhin werden erste Verknüpfungsstrukturen der ersten Module mittels der Datenbank 606 bestimmt, wobei im dargestellten Ausführungsbeispiel jeweils alle Verknüpfungsstrukturen erster Module, die in einem Programmabschnitt der graphischen Trainingsprogrammabschnitte 610.1, 610.2 enthalten sind, abgerufen werden. Alternativ ist es auch möglich, nur einen Teil aller Module als erste Module zu verwenden. Dabei kann es sich insbesondere um Module handeln, die häufig oder am häufigsten in einem Programmabschnitt der graphischen Trainingsprogrammabschnitte 610.1, 610.2 enthalten sind. Im dargestellten Ausführungsbeispiel werden die ersten Verknüpfungsstrukturen nach dem zugehörigen ersten Modul sortiert, sodass im späteren Verlauf des Verfahrens sehr schnell alle ersten Verknüpfungsstrukturen eines ersten Moduls abgerufen werden können.

Im dargestellten Ausführungsbeispiel umfassen die ersten Verknüpfungsstrukturen erster Module nur zweite Module aus der Nachbarschaft erster Ordnung des ersten Moduls, weiterhin umfassen die Verknüpfungsstrukturen erster Module alle Verknüpfungen zwischen dem ersten Modul und den zweiten Modulen, die in einem graphischen Computerprogramm oder in einem graphischen Computerprogrammabschnitt enthalten sind. Alternativ können die ersten Verknüpfungsstrukturen erster Module auch Module aus einer Nachbarschaft höherer Ordnung des ersten Moduls umfassen, insbesondere zweiter oder dritter Ordnung. Alternativ kann eine Verknüpfungsstruktur auch noch weitere Module und Verknüpfungen in dem graphischen Computerprogramm oder in dem graphischen Computerprogrammabschnitt enthalten. Verknüpfungsstrukturen erster Module können aber auch nur eine Teilmenge der in einem graphischen Computerprogramm oder in einem graphischen Computerprogrammabschnitt enthalten Verknüpfungen zwischen dem ersten Modul und den zweiten Modulen umfassen.

Der nächste Schritt des Verfahrens ist das Berechnen CALC von Gewichtungsfaktoren der ersten Verknüpfungsstrukturen. Bei einem Gewichtungsfaktor handelt es sich hierbei um die relative Häufigkeit des Vorkommens einer Verknüpfungsstruktur in den Trainingsprogrammabschnitten 610.1, 610.2. Die relative Häufigkeit wird mit einem Bewertungsfaktor gewichtet, wobei der Bewertungsfaktor einem Trainingsprogrammabschnitt 610.1, 610.2 zugeordnet ist. Der Bewertungsfaktor kann dabei insbesondere bewerten, wer den Trainingsprogrammabschnitt 610.1, 610.2 erstellt hat. Beispielsweise ist es vorstellbar, dass Trainingsprogrammabschnitte 610.1, 610.2, die ein bestimmter Programmierer erstellt hat, besonders hoch bewertet werden. Eine weitere Möglichkeit ist, dass Beispiele für Verknüpfungsstrukturen, die der Entwickler eines Moduls bereitgestellt hat, besonders hoch bewertet werden. Ein Gewichtungsfaktor einer Verknüpfungsstruktur kann insbesondere dadurch berechnet werden, dass die Bewertungsfaktoren der Trainingsprogrammabschnitte 610.1, 610.2, in denen die Verknüpfungsstruktur enthalten ist, addiert werden. Der Gewichtungsfaktor einer Verknüpfungsstruktur eines ersten Moduls kann auch normalisiert werden, indem der Gewichtungsfaktor einer Verknüpfungsstruktur eines ersten Moduls durch die Summer der Gewichtungsfaktoren aller Verknüpfungsstrukturen des ersten Moduls geteilt wird. Alternativ kann der Gewichtungsfaktor auch mit einem selbstlernenden System bestimmt werden, bei einem selbstlernenden System kann es sich um ein künstliches neuronales Netzwerk handeln.

Im dargestellten Ausführungsbeispiel des Verfahrens erfolgen das Bestimmen DET und das Berechnen CALC idealerweise auf einem Rechenserver 607, der mit der Bestimmungseinheit 600 verbunden ist. Der Rechenserver 607 kann sich insbesondere an einem geographisch anderen Ort als die Bestimmungseinheit 600 befinden. Der Rechenserver 607 kann auch als Gruppe von Server-Recheneinheiten 608 ausgeführt sein, hierfür ist der englische Begriff Cluster bzw. Rechencluster bekannt. Der Rechenserver 607 kann auch mit einer Vielzahl von Bestimmungseinheiten 600 verbunden sein. Das Bestimmen DET und das Berechnen CALC können im dargestellten Ausführungsbeispiel des Verfahrens zeitlich unabhängig von den restlichen Verfahrensschritten durchgeführt werden, beispielsweise bei jedem Aufruf der graphischen Programmierumgebung durch einen Programmierer, oder in einem festgelegten zeitlichen Abstand, beispielsweise stündlich oder täglich. Idealerweise können das Bestimmen DET sowie das Berechnen CALC von Gewichtungsfaktoren durchgeführt werden, sobald den Trainingsprogrammabschnitten 610.1, 610.2 ein neuer Trainingsprogrammabschnitt hinzugefügt wird.

Der nächste Schritt des dargestellten Ausführungsbeispiels des Verfahrens ist das Empfangen REC eines Wahl-Moduls 401 sowie einer bestehenden Verknüpfungsstruktur 501 des Wahl-Moduls 401. Das Wahl-Modul 401 kann vom Programmierer in der Bedienoberfläche des graphischen Computerprogramms ausgewählt werden. Im dargestellten Ausführungsbeispiel erfolgt die Auswahl des Wahl-Moduls 401 durch Anklicken des bereits im graphischen Computerprogramm vorhandenen Wahl-Moduls 401 mit der Computermaus 604.3. Die Auswahl des Wahl-Moduls 401 kann alternativ aber auch automatisch erfolgen, indem das zuletzt in das graphische Computerprogramm 300 eingefügte Modul als Wahl-Modul 401 ausgewählt wird. Im dargestellten Ausführungsbeispiel erfolgt das Empfangen REC des mittels der Computermaus 604.3 ausgewählten Wahl-Moduls 401 mittels der Schnittstelle 601. Die Schnittstelle 601 kann daher insbesondere als USB-Schnittstelle ausgeführt sein. Die bestehende Verknüpfungsstruktur 501 des Wahl-Moduls 401 kann auch nur das Wahl-Modul 401 selbst umfassen, und keine weiteren Module oder Verknüpfungen. Dies ist der Fall, wenn ein Wahl-Modul 401 im graphischen Computerprogramm 300 keine zugehörige Verknüpfung aufweist. Neben dem Wahl-Modul 401 und der bestehenden Verknüpfungsstruktur 501 des Wahl-Moduls 401 können auch andere Daten empfangen werden, die in den weiteren Verfahrensschritten genutzt werden können. Beispielsweise können die Daten die Reihenfolge der Einfügung aller vorhandenen Module und/oder Verknüpfungen in das vorliegende graphische Computerprogramm betreffen.

Der nächste Schritt des dargestellten Ausführungsbeispiels des Verfahrens ist das erste Auswählen SEL-1 von Wahl-Verknüpfungsstrukturen 400, 500 aus den ersten Verknüpfungsstrukturen mittels der Recheneinheit, wobei das erste Modul dem Wahl-Modul 401 entspricht, und wobei die Wahl-Verknüpfungsstrukturen 400, 500 die bestehende Verknüpfungsstruktur 501 des Wahl-Moduls 401 umfassen. Da im dargestellten Ausführungsbeispiel des Verfahrens die ersten Verknüpfungsstrukturen beim Bestimmen DET anhand der zugehörigen ersten Module sortiert wurden, kann beim ersten Auswählen SEL-1 auf die ersten Verknüpfungsstrukturen sehr einfach mittels Angabe des Wahl-Moduls 401 zugegriffen werden. Für jede erste Verknüpfungsstruktur wird dann geprüft, ob die erste Verknüpfungsstruktur die im graphischen Computerprogramm bestehende Verknüpfungsstruktur 501 des Wahl-Moduls 401 umfasst. Hierfür wird für jedes Modul 501 der bestehenden Verknüpfungsstruktur 501 geprüft, ob dieses Modul 501 in der ersten Verknüpfungsstruktur enthalten ist, und ob dieses Modul 501 in der ersten Verknüpfungsstruktur mittels einer Verknüpfung mit der gleichen Schnittstelle 402.1 des Wahl-Moduls 401 verbunden ist wie in der bestehenden Verknüpfungsstruktur 501. Die Wahl-Verknüpfungsstrukturen 400, 500 können zusammen mit dem Gewichtungsfaktor dem Programmierer dargestellt werden. Insbesondere kann eine der Wahl-Verknüpfungsstrukturen 400, 500 als Erweiterung des graphischen Computerprogramms 300 in der graphischen Programmieroberfläche dargestellt sein, und gleichzeitig ein Auswahlelement eingeblendet werden, das eine Auswahl einer anderen darzustellenden Wahl-Verknüpfungsstruktur 400, 500 wenigstens nach dem Gewichtungsfaktor ermöglicht.

Der nächste Schritt des Verfahrens ist das zweite Auswählen SEL-2 einer ausgewählten Verknüpfungsstruktur aus den Wahl-Verknüpfungsstrukturen 400, 500. Der Programmierer kann hierbei aus den dargestellten Wahl-Verknüpfungsstrukturen 400, 500 diejenige auswählen, die am besten den Anforderungen an das zu erstellende graphische Computerprogramm entspricht. Hierfür kann er in einem Kontextmenü auswählen, dass die gerade dargestellte Wahl-Verknüpfungsstruktur 400, 500 im graphischen Computerprogramm verwendet werden soll. Alternativ kann das zweite Auswählen SEL-2 der ausgewählten Verknüpfungsstruktur 400, 500 auch automatisch erfolgen, indem die Wahl-Verknüpfungsstruktur 400, 500 mit dem höchsten Gewichtungsfaktor bestimmt wird.

Der letzte Schritt des dargestellten Verfahrens ist das Ergänzen SUPL der bestehenden Verknüpfungsstruktur 501 des Wahl-Moduls 401, basierend auf der ausgewählten Verknüpfungsstruktur. Hierbei werden alle Module und Verknüpfungen der ausgewählten Verknüpfungsstruktur in das graphische Computerprogramm eingefügt, soweit sie nicht schon in der bestehenden Verknüpfungsstruktur und damit im graphischen Computerprogramm vorhanden sind.

FIG 2 zeigt ein weiteres Flussdiagramm eines anderen Ausführungsbeispiels des Verfahrens. Der erste Schritt in diesem Ausführungsbeispiel ist das Empfangen REC eines Wahl-Moduls 401 und der bestehenden Verknüpfungsstruktur 501 des Wahl-Moduls 401 mittels der Schnittstelle 601. Der nächste Schritt ist das Bestimmen DET von ersten Verknüpfungsstrukturen wenigstens eines ersten Moduls in graphischen Trainingsprogrammabschnitten 610.1, 610.2 mittels der Recheneinheit 602. In diesem Ausführungsbeispiel betrifft das Bestimmen DET nur das Wahl-Modul 401 als erstes Modul. Der nächste Schritt ist das erste Auswählen SEL-1 von Wahl-Verknüpfungsstrukturen 400, 500 aus den ersten Verknüpfungsstrukturen, wobei die Wahl-Verknüpfungsstrukturen 400, 500 die bestehende Verknüpfungsstruktur 501 des Wahl-Moduls 401 umfassen. Da in diesem Ausführungsbeispiel das Bestimmen DET nur das Wahl-Modul 401 als erstes Modul betrifft, ist der erste Schritt des ersten Auswählens SEL-1 trivial. Der nächste Schritt im beschriebenen Beispiel ist das Berechnen CALC von Gewichtungsfaktoren für jede der Wahl-Verknüpfungsstrukturen 400, 500. Anders als bei dem im FIG 1 dargestellten Ausführungsbeispiel muss also der Gewichtungsfaktor nur für diejenigen Verknüpfungsstrukturen berechnet werden, welche das Wahl-Modul 401 betreffen und welche die bestehende Verknüpfungsstruktur 501 des Wahl-Moduls 401 umfassen. Wie im in FIG 1 dargestellten Ausführungsbeispiels folgen als weitere Schritte das zweite Auswählen SEL-2 einer ausgewählten Verknüpfungsstruktur aus den Wahl-Verknüpfungsstrukturen 400, 500 sowie das Ergänzen SUPL der Verknüpfungsstruktur des Wahl-Moduls 401, basierend auf der ausgewählten Verknüpfungsstruktur.

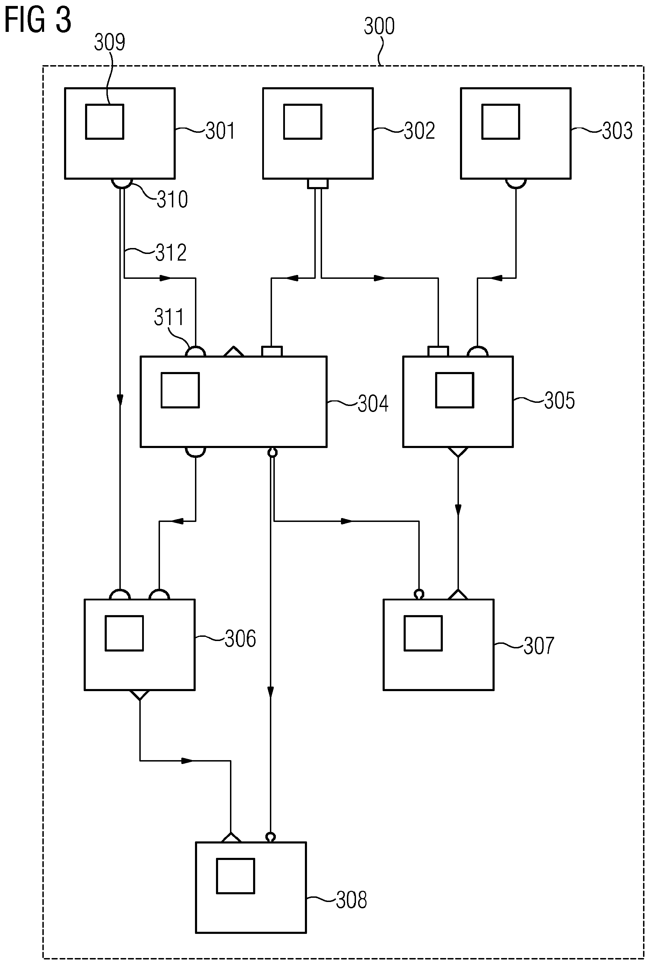

FIG 3 zeigt ein graphisches Computerprogramm 300. Das graphische Computerprogramm 300 besteht aus Eingabemodulen 301, 302 und 303, aus Ausgabemodulen 307, 308 sowie aus weiteren Modulen 304, 305 und 306. Jedem der Module 301 bis 308 kann ein gewisser Parametersatz zugeordnet werden, hier sind dem Modul 301 die Parameter 309 zugeordnet. Jedes Modul 301 bis 308 umfasst wenigstens eine Eingangsschnittstelle 311 und/oder wenigstens eine Ausgangsschnittstelle 310. Eine Ausgabeschnittstelle 310 eines Moduls 301 kann über eine Verknüpfung 312 mit einer Eingabeschnittstelle 311 eines weiteren Moduls 304 verbunden sein. Das Vorhandensein einer Verknüpfung 312 sagt aus, dass im Ablauf des graphischen Computerprogramms die Ergebnisdaten des Moduls 301 an das Modul 304 übermittelt werden. Eine Ausgabeschnittstelle 310 eines Moduls 301 kann Ausgangspunkt von mehreren Verknüpfungen 312 sein, hierbei werden dann die Ausgangsdaten des Moduls 301 an mehrere andere Module als Eingangsdaten übertragen. Im hier gezeigten Ausführungsbeispiel ist es nicht möglich, dass eine Eingangsschnittstelle 311 eines Modules 304 die Eingangsschnittstelle 311 von mehreren Verknüpfungen ist. Ist es für ein Modul 304 notwendig, mehrere Eingangsdaten des gleichen Datentyps zu empfangen, so muss das Modul mehrere Eingangsschnittstellen 311 dieses Datentyps aufweisen. Alternativ sind auch Eingangsschnittstellen 311 mit mehreren Verknüpfungen 312 möglich, insbesondere wenn die Reihenfolge der Eingangsdaten des gleichen Datentyps irrelevant ist. Falls die Reihenfolge der Eingangsdaten relevant ist, dann kann die Reihenfolge durch die graphische Anordnung der Verknüpfungen implementiert werden (beispielsweise von rechts nach links oder von oben nach unten).

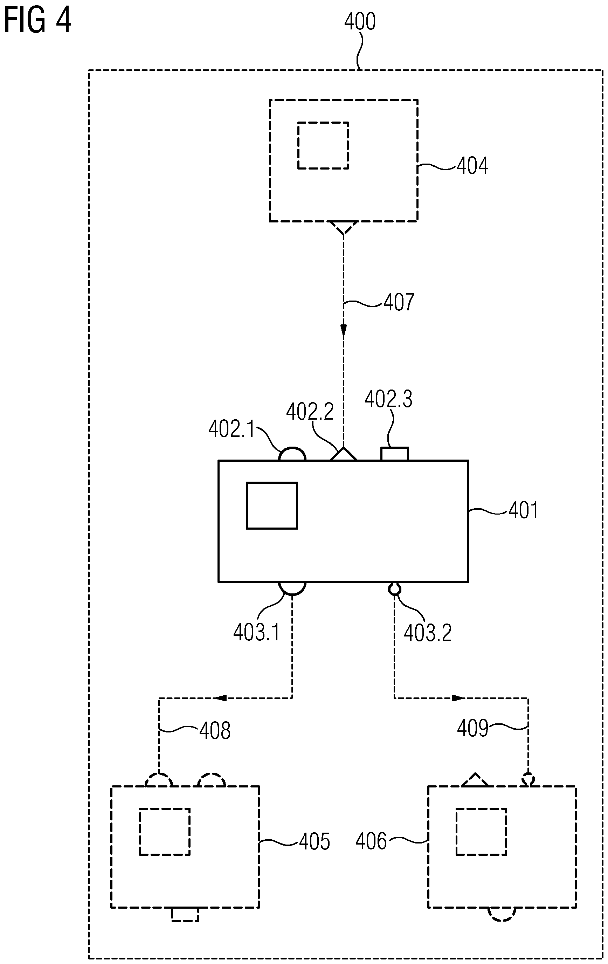

FIG 4 zeigt ein Wahl-Modul 401 zusammen mit einer Wahl-Verknüpfungsstruktur 400. Das Wahl-Modul 401 umfasst Eingangsschnittstellen 402.1, 402.2, 402.3 sowie Ausgangsschnittstellen 403.1, 403.2. Im dargestellten Beispiel umfasst die bestehende Verknüpfungsstruktur neben dem Wahl-Modul 401 keine weiteren Module oder Verknüpfungen. Daher kann jede erste Verknüpfungsstruktur des Wahl-Moduls 401 als Wahl-Verknüpfungsstruktur 400, 500 verwendet werden. Die dargestellte Wahl-Verknüpfungsstruktur 400 umfasst drei Module 404, 405, 406, die mittels Verknüpfungen 407, 408, 409 mit dem Wahl-Modul 401 verbunden sind. Hierbei ist das Modul 404 über die Verknüpfung 407 mit der Eingangsschnittstelle 402.2 des Wahl-Moduls 401 verbunden, das Modul 405 ist über die Verknüpfung 408 mit der Ausgangsschnittstelle 403.1 des Wahl-Moduls 401 verbunden, das Modul 406 ist über die Verknüpfung 409 mit der Ausgangsschnittstelle 403.2 des Wahl-Moduls 401 verbunden. In einer Wahl-Verknüpfungsstruktur 400, 500 muss nicht für jede Schnittstelle des Wahl-Moduls 401 eine Verknüpfung zu einem anderen Modul vorhanden sein. In der dargestellten Wahl-Verknüpfungsstruktur 400 sind die Schnittstellen 402.1 und 402.3 des Wahl-Moduls 401 mit keinem weiteren Modul verbunden.

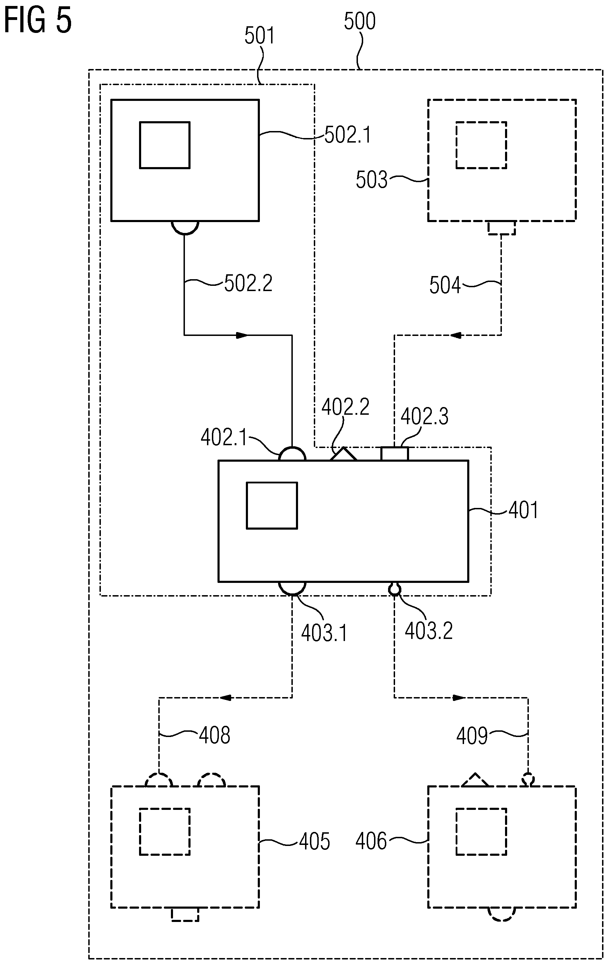

FIG 5 zeigt eine weitere Wahl-Verknüpfungsstruktur 500 des Wahl-Moduls 401. Im Unterschied zu der in FIG 4 dargestellten Wahl-Verknüpfungsstruktur 400 ist das Wahl-Modul 401 im graphischen Computerprogramm 300 bereits mit einem weiteren Modul 502.1 über eine Verknüpfung 502.2 sowie über die Schnittstelle 402.1 des Wahlmoduls 401 verbunden. Daher umfasst hier die bestehende Verknüpfungsstruktur 501 neben dem Wahl-Modul 401 noch ein weiteres Modul 502.1 sowie eine Verknüpfung 502.2. Das erste Auswählen SEL-1 betrifft daher nur Wahl-Verknüpfungsstrukturen 500, welche die bestehende Verknüpfungsstruktur 501 umfassen. In dieser Figur ist eine Wahl-Verknüpfungsstruktur 500 dargestellt, die neben dem Modul 502.1 der bestehenden Verknüpfungsstruktur und der Verknüpfung 502.2 der bestehenden Verknüpfungsstruktur auch die Module 405, 406 und 503 sowie Verknüpfungen 408, 409 und 504 umfasst. Hierbei ist das Modul 503 über die Verknüpfung 504 mit der Eingangsschnittstelle 402.3 des Wahl-Moduls 401 verbunden. Weiterhin ist das Modul 405 über die Verknüpfung 408 mit der Ausgangsschnittstelle 403.1 des Wahl-Moduls 401 verbunden. Weiterhin ist das Modul 406 über die Verknüpfung 409 mit der Ausgangsschnittstelle 403.2 des Wahl-Moduls 401 verbunden.

In den beiden in FIG 4 und FIG 5 dargestellten Beispielen sind die Teile der Wahl-Verknüpfungsstruktur 400, 500, die nicht von der bestehenden Verknüpfungsstruktur 501 des Wahl-Moduls 401 umfasst sind, durch gestrichelte Linien dargestellt. Dies dient der Unterscheidung von tatsächlich im Programm vorhandenen Modulen und Verknüpfungen von den vorgeschlagenen Verknüpfungen und Modulen der dargestellten Wahl-Verknüpfungsstruktur 400, 500. Alternativ kann die Unterscheidung auch durch unterschiedliche Farbtöne oder Farbhelligkeiten ermöglicht werden.

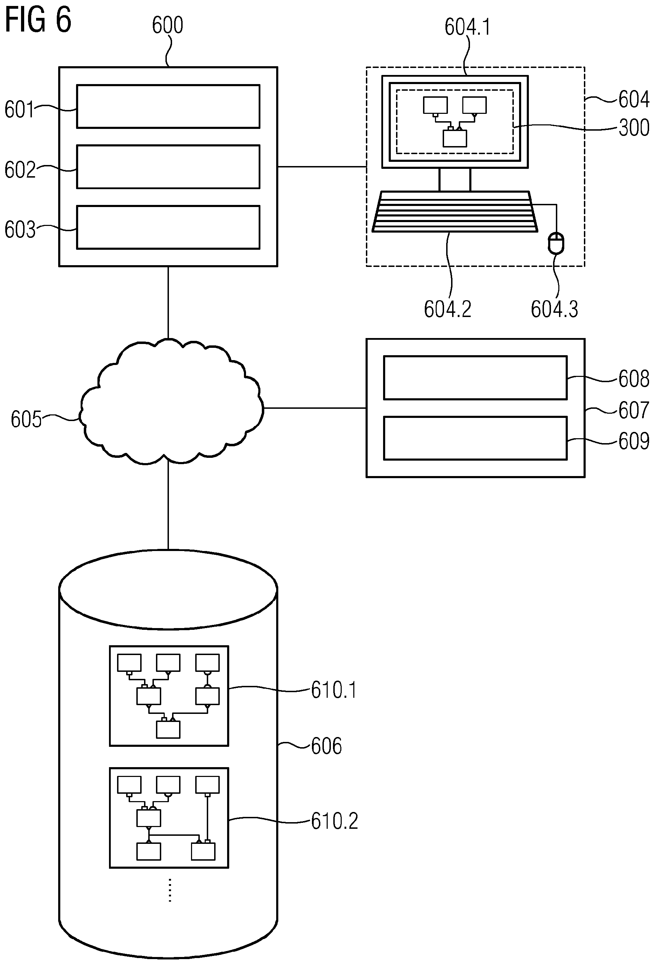

FIG 6 zeigt eine Bestimmungseinheit 600 zur Bestimmung von Wahl-Verknüpfungsstrukturen 400, 500. Die hier gezeigte Bestimmungseinheit ist ausgelegt, ein erfindungsgemäßes Verfahren auszuführen. Diese Bestimmungseinheit 600 umfasst eine Schnittstelle 601, eine Recheneinheit 602 und eine Speichereinheit 603. Weiterhin ist mit der Bestimmungseinheit 600 eine Ein- und Ausgabeeinheit 604 verbunden. Die Bestimmungseinheit 600 zur Bestimmung von Wahl-Verknüpfungsstrukturen ist über ein Netzwerk 605 mit einer Datenbank 606 verbunden, die Trainingsprogrammabschnitte 610.1, 610.2 enthält. Die Datenbank kann einen Server zur Versionsverwaltung (beispielsweise mittels den Versionsverwaltungsprogrammen "SVN" oder "git") umfassen, es sind aber auch andere Architekturen vorstellbar. Beim Netzwerk 605 kann es sich um das Internet oder ein Intranet handeln. Die Datenbank 606 kann aber auch lokal mit der Bestimmungseinheit 600 verbunden sein. Die Datenbank 606 kann auch Teil der Bestimmungseinheit 600 zur Bestimmung von Wahl-Verknüpfungsstrukturen 400, 500 sein. In der gezeigten Ausführungsform ist die Bestimmungseinheit 600 über das Netzwerk 605 mit einem Rechenserver 607 verbunden. Der Rechenserver 607 umfasst eine Server-Recheneinheit 608 und eine Server-Speichereinheit 609. Im gezeigten Ausführungsbeispiel der Bestimmungseinheit 600 wird das Flussdiagramm aus FIG 1 implementiert, und das Bestimmen DET der ersten Verknüpfungsstrukturen sowie das Berechnen CALC der Gewichtungsfaktoren wird auf der Server-Recheneinheit 608 des Rechenservers 607 durchgeführt. Die ersten Verknüpfungsstrukturen sowie die zugehörigen Gewichtungsfaktoren werden in der Server-Speichereinheit 609 gespeichert, sie können aber auch mittels des Netzwerks 605 in die Speichereinheit 603 übertragen werden.

Bei der Bestimmungseinheit 600 zur Bestimmung von Wahl-Verknüpfungsstrukturen 400, 500 und/oder beim Rechenserver 607 kann es sich insbesondere um einen Computer, einen Mikrocontroller oder um einen integrierten Schaltkreis handeln. Alternativ kann es sich bei der Bestimmungseinheit 600 und/oder beim Rechenserver 607 um einen realen oder virtuellen Verbund von Computern handeln (ein englischer Fachbegriff für einen realen Verbund ist "Cluster", ein englischer Fachbegriff für einen virtuellen Verbund ist "Cloud"). Bei einer Schnittstelle 601 kann es sich um eine Hardware- oder Softwareschnittstelle handeln (beispielsweise PCI-Bus, USB oder Firewire). Eine Recheneinheit 602 und/oder eine Server-Recheneinheit 608 kann Hardware-Element oder Software-Elemente aufweisen, beispielsweise einen Mikroprozessor oder ein sogenanntes FPGA (englisches Akronym für "Field Programmable Gate Array"). Eine Speichereinheit 603 und/oder eine Server-Speichereinheit 609 kann als nicht dauerhafte Arbeitsspeicher (Random Access Memory, kurz RAM) oder als dauerhafter Massenspeicher (Festplatte, USB-Stick, SD-Karte, Solid State Disk) realisiert sein. Eine Ein- und Ausgabeeinheit 604 umfasst wenigstens eine Eingabeeinheit und/oder wenigstens eine Ausgabeeinheit. In der gezeigten Ausführungsform umfasst die Ein- und Ausgabeeinheit einen Bildschirm 604.1, eine Tastatur 604.2 sowie eine Computermaus 604.3. Im gezeigten Ausführungsbeispiel ist der Bildschirm 604.1 dazu ausgebildet, ein graphisches Computerprogramm 300 darzustellen.

In den Tabellen A, B und C ist Pseudocode aufgeführt, der verschiedene Ausführungsbeispiele des Verfahrens implementiert.

| Tabelle A: Pseudocode für die Verfahrensschritte DET und CALC im Ausführungsbeispiel FIG 1 |
|---|

```
A.1 first_modules = empty_list()
A.2 for ts in training_snippets:
A.3 first_modules.append(ts.modules())
A.4    first_modules = first_modules.unique()
A.5 weights = empty_dictionary()
A.6 for fm in first_modules:
A.7    weights [fm] = empty_dictionary()
A.8 for fm in first_modules, for ts in training_snippets:
A.9   if fm not in ts: next ts
A.10    structs = ts.connection_structures(fm)
A.11    for struct in structs:
A.12      if struct in weights[fm]:
A.13         weights[fm][struct] += ts.snippet_weight()
A.14      else:
A.15         weights [fm] [struct] = ts.snippet_weight()
A.16 for fm in first_modules:
A.17    weights[fm].sort dict by value()
```

Tabelle A zeigt den Pseudocode für die Verfahrensschritte DET und CALC des in FIG 1 gezeigten Flussdiagramms. In den Codezeilen A.1 bis A.4 wird eine Liste "first_modules" erzeugt, die alle Module enthält, die in den Trainingsprogrammabschnitten "training_snippets" enthalten sind. Hierfür wird zunächst "first_modules" als eine leere Liste erzeugt A.1, und für jeden Trainingsprogrammabschnitt "ts" die Module von "ts" an die Liste "first_modules" angehängt A.3. Schließlich werden mehrfach vorkommende Module aus der Liste "first_modules" entfernt A.4. Alternativ wäre es in diesem Schritt auch möglich, die Häufigkeit des Vorkommens eines Moduls in den graphischen Trainingsprogrammabschnitten auszuwerten, und die folgenden Vorberechnungen nur für eine kleine Menge der am häufigsten vorkommenden Module durchzuführen.

Anschließend wird in den Codezeilen A.5 bis A.7 das Objekt "weights" als assoziatives Datenfeld von assoziativen Datenfeldern angelegt. Für den Begriff assoziatives Datenfeld sind auch die englischen Begriffe "dictionary" (z.B. in der Programmiersprache python) oder "map" (z.B. in der Programmiersprache C++) bekannt. Ein assoziatives Datenfeld umfasst eine Menge von Schlüssel-Wert-Zuweisungen, wobei der Wert durch Angabe des Schlüssels in eckigen Klammern abgerufen werden kann.

Im Pseudocode folgt eine verschachtelte Schleife über alle ersten Module "fm" in "first_modules", sowie über alle Trainingsprogrammabschnitte "ts" in "training_snippets" A.8. Falls das erste Modul "fm" nicht in einem Trainingsprogrammabschnitt "ts" enthalten ist, wird die nächste Iteration der verschachtelten Schleife aufgerufen A.9. Ist das erste Modul "fm" in dem Trainingsprogrammabschnitt "ts" enthalten, werden alle ersten Verknüpfungsstrukturen "structs" des ersten Moduls "fm" in dem Trainingsprogrammabschnitt "ts" bestimmt. Dabei enthält die Liste "structs" für jedes Vorkommen des ersten Moduls "fm" in dem Trainingsprogrammabschnitt "ts" eine erste Verknüpfungsstruktur. In den Codezeilen A.11 bis A.15 wird für jede erste Verknüpfungsstruktur "struct" in "structs" geprüft, ob die Kombination aus dem ersten Modul "fm" und der ersten Verknüpfungsstruktur "struct" bereits im verschachtelten assoziativen Datenfeld "weights" vorhanden ist. Ist die Kombination im verschachtelten assoziativen Datenfeld "weights" enthalten, so wird der dazugehörige Wert um den Bewertungsfaktor "ts.snippet_weight()" des Trainingsprogrammabschnitts "ts" erhöht, andernfalls wird dieser Kombination der Bewertungsfaktor "ts.snippet_weight()" des Trainingsprogrammabschnitts "ts" zugewiesen.

In den Pseudocodezeilen A.16 und A.17 wird jedes assoziative Datenfeld "weights [fm]" nach den Werten geordnet, hier also nach den Gewichtungsfaktoren der Verknüpfungsstrukturen.

Mit einem sehr ähnlichen Pseudocode ist das Verfahren auch ohne den Schritt des Berechnens CALC eines Gewichtungsfaktors durchzuführen. Hierfür müssen die Codezeilen A.12 bis A.14 entfernt werden, sowie "ts.snippet weight ()" in der Zeile A.15 durch die Zahl 1 ersetzt werden. Weiterhin können die Codezeilen A.16 und A.17 entfallen. Die zu einem ersten Modul "fm" gefundenen Strukturen entsprechen dann genau der Liste der Schlüssel des assoziativen Datenfelds "weights [fm]".

| Tabelle B: Pseudocode für die Verfahrensschritte REC und SEL-1 im Ausführungsbeispiel FIG 1 |
|---|
| ```
B.1 module_choose = interface.receive_module()
B.2 struct_exist = program.connection_structure(module_choose)
B.3 suggested_structs = empty_dictionary ()
B.4 for struct in weights[choose_module].keys ():
B.5    if struct.contains(struct_exist):
B.6       suggested_structs[struct] =
             weights [choose_module][struct]
B.7       print struct, suggested structs [struct]
``` |

Tabelle B zeigt Pseudocode für die Verfahrensschritte REC und SEL-1 im Ausführungsbeispiel der FIG 1, wobei der Pseudocode der Tabelle B nach dem Pseudocode der Tabelle A ausgeführt wird und auf die im Pseudocode der Tabelle A deklarierten und/oder definierten Objekte zugreifen kann. Zunächst wird das Wahl-Modul "module_choose" von der Schnittstelle "inter-face" empfangen B.1 und die bestehende Verknüpfungsstruktur "struct_exist" des Wahl-Moduls im graphischen Computerprogramm ermittelt. Anschließend wird in B.3 "suggested_structs" als leeres assoziatives Datenfeld angelegt, dieses assoziative Datenfeld wird als Schlüssel Wahl-Verknüpfungsstrukturen und als Wert den zugehörigen Gewichtungsfaktor speichern. Für alle ersten Verknüpfungsstrukturen "struct" des Wahl-Moduls wird dann in B.5 überprüft, ob diese die bestehende Verknüpfungsstruktur "struct_exist" beinhalten. Ist dies der Fall, so wird die erste Verknüpfungsstruktur "struct" zusammen mit ihrem Gewichtungsfaktor in Zeile B.6 gespeichert und in Zeile B.7 ausgegeben. Dadurch, dass das "weights" bereits in Tabelle A sortiert wurde, werden in B.7 die Wahl-Verknüpfungsstrukturen nach dem Gewichtungsfaktor sortiert ausgegeben.

| Tabelle C: Pseudocode für das Ausführungsbeispiel FIG 2 |
|---|
| ```
C.1 module_choose = interface.receive module ()
C.2 struct_exist = program.connection_structure (module_choose)
C.3 suggested_structs = empty_dictionary ()
C.4 for ts in training_snippets:
C.5    if module_choose not in ts: next ts
C.6    structs = ts.connection_structures(module_choose)
C.7    containing_structs = empty_list
C.8    for struct in structs:
C.9       if struct.contains(struct_exist):
C.10         containing_structs.append(struct)
C.11   for struct in containing_structs:
C.12   if struct in suggested_structs:
C.13        suggested_structs[struct] +=
            ts.snippet_weight()
C.14      else:
C.15        suggested_structs[struct] =
            ts.snippet_weight()
C.16 suggested_structs.sort_dict_by_value()
C.17 for struct in suggested_structs.keys():
C.18    print struct, suggested structs[struct]
``` |

Tabelle C zeigt Pseudocode für die Verfahrensschritte REC, DET, SEL-1 und CALC im Ausführungsbeispiel der FIG 2. In den Codezeilen C.1 und C.2 wird das Wahl-Module "module_choose" sowie die bestehende Verknüpfungsstruktur "struct_exist" des Wahl-Moduls empfangen. Die Wahl-Verknüpfungsstrukturen "suggested_structs" werden in Codezeile C.3 als leeres assoziatives Datenfeld angelegt. Als Schlüssel des assoziativen Datenfelds wird hierbei die Wahl-Verknüpfungsstruktur verwendet, als Wert wird hierbei der Gewichtungsfaktor der Wahl-Verknüpfungsstruktur verwendet. Für jeden graphischen Trainingsprogrammabschnitt "ts" in den graphischen Trainingsprogrammabschnitten "training_snippets" wird zunächst in der Codezeile C.5 überprüft, ob der graphische Trainingsprogrammabschnitt "ts" das Wahl-Modul "module_choose" enthält. Ist dies der Fall, werden in Codezeile C.6 die ersten Verknüpfungsstrukturen "structs" des Wahl-Moduls "module_choose" im graphischen Trainingsprogrammabschnitt "ts" abgerufen. In den Codezeilen C.7 bis C.10 werden aus den ersten Verknüpfungsstrukturen "structs" die Wahl-Verknüpfungsstrukturen "containing_structs" ausgewählt, welche die bestehende Verknüpfungsstruktur "struct_exist" des Wahl-Moduls enthalten. Analog zu den Codezeilen A.11 bis A.15 werden in den Codezeilen C.11 bis C.15 die Gewichtungsfaktoren der Wahl-Verknüpfungsstrukturen "suggested_structs" berechnet. Die Codezeilen C.16 bis C.18 führen die gleichen Schritte aus wie die Codezeilen A.17, B.4 und B.7.

**Patentansprüche**

1. Verfahren zum Bestimmen von Wahl-Verknüpfungsstrukturen (400, 500), umfassend die folgenden Verfahrensschritte:

   - Bestimmen (DET) von ersten Verknüpfungsstrukturen wenigstens eines ersten Moduls mittels einer Recheneinheit (602), wobei die ersten Verknüpfungsstrukturen sowie das erste Modul in graphischen Trainingsprogrammabschnitten (610.1, 610.2) enthalten sind,
   - Empfangen (REC) eines Wahl-Moduls (401) sowie einer bestehenden Verknüpfungsstruktur (501) des Wahl-Moduls mittels einer Schnittstelle (601),
   wobei das Wahl-Modul (401) in einem graphischen Computerprogramm (300) enthalten ist,
   und wobei die bestehende Verknüpfungsstruktur (501) die Verknüpfungsstruktur des Wahl-Moduls (401) in dem graphischen Computerprogramm (300) bezeichnet,
   - Erstes Auswählen (SEL-1) von Wahl-Verknüpfungsstrukturen (400, 500) aus der Menge der ersten Verknüpfungsstrukturen mittels der Recheneinheit (602),
   wobei jede der Wahl-Verknüpfungsstrukturen (400, 500) eine Verknüpfungsstruktur des Wahl-Moduls (401) ist,
   und wobei jede der Wahl-Verknüpfungsstrukturen (400, 500) die bestehende Verknüpfungsstruktur (501) des Wahl-Moduls (401) umfasst.

2. Verfahren nach Anspruch 1, wobei das Bestimmen (DET) vor dem Empfangen (REC) erfolgt, und wobei das erste Modul wenigstens das am häufigsten in den graphischen Trainingsprogrammabschnitten (610.1, 610.2) enthaltene Modul umfasst.

3. Verfahren nach Anspruch 2, wobei die ersten Module alle in den graphischen Trainingsprogrammabschnitten (610.1, 610.2) enthaltenen Module umfassen.

4. Verfahren nach Anspruch 1, wobei das Empfangen (REC) eines Wahl-Moduls (401) vor dem Bestimmen (DET) erfolgt, und wobei das erste Modul das Wahl-Modul (401) ist.

5. Verfahren nach einem der Ansprüche 1 bis 4, weiterhin umfassend folgenden Verfahrensschritt:

   - Berechnen (CALC) von Gewichtungsfaktoren der ersten Verknüpfungsstrukturen oder der Wahl-Verknüpfungsstrukturen (400, 500) basierend auf den graphischen Trainingsprogrammabschnitten (610.1, 610.2) mittels der Recheneinheit (602).

6. Verfahren nach Anspruch 5, wobei der Gewichtungsfaktor einer Verknüpfungsstruktur wenigstens eine gewichtete relative Häufigkeit des Auftretens der Verknüpfungsstruktur in den graphischen Trainingsprogrammabschnitten (610.1, 610.2) betrifft,
   wobei die Gewichtung der relativen Häufigkeit mittels eines Bewertungsfaktors erfolgt,
   und wobei der Bewertungsfaktor einem graphischen Trainingsprogrammabschnitt (610.1, 610.2) zugeordnet ist.

7. Verfahren nach Anspruch 6, wobei jedem graphischen Trainingsprogrammabschnitt (610.1, 610.2) der gleiche Bewertungsfaktor zugeordnet ist.

8. Verfahren nach einem der Ansprüche 5 bis 7, wobei der Gewichtungsfaktor einer Verknüpfungsstruktur mittels eines selbstlernenden Systems basierend auf den graphischen Trainingsprogrammabschnitten (610.1, 610.2) berechnet wird.

9. Verfahren nach Anspruch 8, wobei das selbstlernende System ein künstliches neuronales Netzwerk umfasst, welches in einer Trainingsphase graphische Trainingsprogrammabschnitte (610.1, 610.2) ohne das Wahl-Modul (401) auf graphische Trainingsprogrammabschnitte (610.1, 610.2) umfassend das Wahl-Modul (401) sowie umfassend eine Verknüpfungsstruktur des Wahl-Moduls (401) abbildet.

10. Verfahren nach einem der vorherigen Ansprüche, weiterhin umfassend folgende Verfahrensschritte, jeweils durchgeführt mittels der Recheneinheit (602):

    - Zweites Auswählen (SEL-2) einer ausgewählten Verknüpfungsstruktur aus den Wahl-Verknüpfungsstrukturen (400, 500),

- Ergänzen (SUPL) der Verknüpfungsstruktur des Wahl-Moduls (401) basierend auf der ausgewählten Verknüpfungsstruktur.

11. Verfahren nach Anspruch 10 rückbezogen auf einen der Ansprüche 5 bis 9, wobei das zweite Auswählen (SEL-2) der ausgewählten Verknüpfungsstruktur aus den Wahl-Verknüpfungsstrukturen (400, 500) mittels des Gewichtungsfaktors erfolgt.

12. Verfahren nach einem der vorherigen Ansprüche, wobei eine Verknüpfungsstruktur eines ersten Moduls nur zweite Module, die in einer Nachbarschaft erster Ordnung des ersten Moduls enthalten sind, sowie alle Verknüpfungen zwischen dem ersten Modul und den zweiten Modulen umfasst.

13. Bestimmungseinheit (600) zum Bestimmen einer Verknüpfungsstruktur, umfassend folgende Einheiten:

    - Schnittstelle (601), ausgebildet zum Empfangen (REC) eines Wahl-Moduls (401) sowie einer bestehenden Verknüpfungsstruktur (501) des Wahl-Moduls (401),
    wobei das Wahl-Modul (401) in einem graphischen Computerprogramm enthalten ist,
    und wobei die bestehende Verknüpfungsstruktur (501) die Verknüpfungsstruktur des Wahl-Moduls in dem graphischen Computerprogramm bezeichnet,
    - Recheneinheit (602), ausgebildet zum Bestimmen (DET) von ersten Verknüpfungsstrukturen wenigstens eines ersten Moduls, wobei die ersten Verknüpfungsstrukturen sowie das erste Modul in graphischen Trainingsprogrammabschnitten (610.1, 610.2) enthalten sind,
    weiterhin ausgebildet zum ersten Auswählen (SEL-1) von Wahl-Verknüpfungsstrukturen (400, 500) aus der Menge der ersten Verknüpfungsstrukturen mittels der Recheneinheit (602), wobei jede der Wahl-Verknüpfungsstrukturen (400, 500) eine Verknüpfungsstruktur des Wahl-Moduls (401) ist,
    und wobei jede der Wahl-Verknüpfungsstrukturen (400, 500) die bestehende Verknüpfungsstruktur (501) des Wahl-Moduls (401) umfasst.

14. Bestimmungseinheit nach Anspruch 13, weiterhin ausgebildet das Verfahren nach einem der Ansprüche 2 bis 12 auszuführen.

15. Computerprogrammprodukt, umfassend ein graphisches Computerprogramm und/oder ein Computerprogramm, das durch Kompilierung oder Interpretierung aus dem graphischen Computerprogramm hervorgegangen ist, wobei das graphische Computerprogramm unter Verwendung des Verfahrens nach einem der Ansprüche 1 bis 12 erstellt wurde.

FIG 1

DET

CALC

REC

SEL-1

SEL-2

SUPL

FIG 2

REC

DET

SEL-1

CALC

SEL-2

SUPL

FIG 3

FIG 4

FIG 5

FIG 6

Europäisches Patentamt

European Patent Office

Office européen des brevets

**EUROPÄISCHER RECHERCHENBERICHT**

Nummer der Anmeldung

EP 16 19 7756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2007/057008 A1 (SAXO BANK AS [DK]; JOHANSEN BENNY [DK]; HAGUE DAVID JHON [DK]) 24. Mai 2007 (2007-05-24) <br> * Zusammenfassung * <br> * Absatz [0036] - Absatz [0037] * <br> * Absatz [0049] - Absatz [0065] * <br> * Absatz [0101] - Absatz [0156] * <br> * Ansprüche 1-41; Abbildungen 1-15 * <br> ----- | 1-15 | INV. <br> G06F9/44 |
| A | MARTIN C CARLISLE ET AL: "RAPTOR", COMPUTER SCIENCE EDUCATION, ACM, 2 PENN PLAZA, SUITE 701 NEW YORK NY 10121-0701 USA, <br> 23. Februar 2005 (2005-02-23), Seiten 176-180, XP058137936, <br> DOI: 10.1145/1047344.1047411 <br> ISBN: 978-1-58113-997-6 <br> * das ganze Dokument * <br> ----- | 1-15 | |
| | | | **RECHERCHIERTE SACHGEBIETE (IPC)** <br><br> G06F |

Der vorliegende Recherchenbericht wurde für alle Patentansprüche erstellt

| Recherchenort | Abschlußdatum der Recherche | Prüfer |
|---|---|---|
| München | 4. April 2017 | Skomorowski, Markus |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 7756

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2017

| Im Recherchenbericht angeführtes Patentdokument | Datum der Veröffentlichung | Mitglied(er) der Patentfamilie | Datum der Veröffentlichung |
|---|---|---|---|
| WO 2007057008 A1 | 24-05-2007 | AU 2006314882 A1<br>EP 1952330 A1<br>US 2010057600 A1<br>WO 2007057008 A1 | 24-05-2007<br>06-08-2008<br>04-03-2010<br>24-05-2007 |

Für nähere Einzelheiten zu diesem Anhang : siehe Amtsblatt des Europäischen Patentamts, Nr.12/82

EPO FORM P0461